# EUROPÄISCHE PATENTSCHRIFT

(11) **EP 0 651 153 B1**
(45) Veröffentlichungstag und Bekanntmachung des Hinweises auf die Patenterteilung: **06.08.1997**
(21) Anmeldenummer: 94116147.3
(22) Anmeldetag: 13.10.1994
(51) Int. Cl.: F02M 37/10, B60K 15/077

(54) **Fördereinheit mit einem Füllstandsgeber**
Supply unit with level detector
Unité d'alimentation en carburant avec capteur de niveau du liquide

(30) Priorität: 28.10.1993 DE 4336858
(43) Veröffentlichungstag der Anmeldung: 03.05.1995
(73) Patentinhaber: Bayerische Motoren Werke Aktiengesellschaft, 80788 München (DE)
(72) Erfinder: Kroiss, Hugo, D-82194 Gröbenzell (DE); Tuschl, Günther, D-83059 Kolbermoor (DE)

(56) Entgegenhaltungen:
- DE-A- 2 740 653
- DE-A- 2 750 081
- DE-A- 3 927 218
- US-A- 4 750 513
- US-A- 5 038 741

## Beschreibung

Die Erfindung betrifft eine Fördereinheit mit einem Füllstandsgeber in einem Kraftstoffbehälter gemäß dem Oberbegriff des Anspruchs 1.

Aus der US-A-5,038,741 ist eine Fördereinheit mit einem Füllstandsgeber bekannt, die in einen Kraftstoffbehälter eines Kraftfahrzeuges eingebaut wird. Die vorbekannte Fördereinheit weist ein Gehäuse auf, dessen untere Hälfte zur Halterung einer Kraftstoffpumpe und als Schwalltopf dient und dessen obere Hälfte als ein federnder Balg ausgebildet ist. Die obere Öffnung des Balges ist durch einen Flansch verschlossen. Im eingebauten Zustand ist der Balg um einen vorbestimmten Betrag zusammengedrückt, so daß eine Federkraft über das Gehäuse auf den Boden des Kraftstoffbehälters wirkt. Aufgrund dieser Bauart werden Vibrationen in der vertikalen Richtung ausgeglichen, so daß diese Bewegungen nicht auf die Meßgenauigkeit eines an der Fördereinheit angeordneten Füllstandsgebers wirken. Nachteilig bei dieser bekannten Fördereinheit ist jedoch, daß bei einer schrägen Verformung oder Winkelabweichung von der Sollage des Flansches und/oder des Bodens des Kraftstoffbehälters der Füllstandsgeber aus seiner Sollage herausbewegt wird, so daß der vom Füllstandsgeber gemessene Füllstand nicht dem tatsächlichen Füllstand entspricht.

Aus der DE-OS 27 40 653 ist bereits eine Flüssigkeitsstand-Meßeinrichtung bekannt, bei der über eine an einem Befestigungsflansch ausgebildeten Längsführung ein Gehäuse mit einer daran angeordneten Motorpumpe federnd am Boden eines Kraftstoffbehälters abgestützt ist. Die aus zwei gegenüberliegenden Langlöchem und einem in den Längslöchem verschiebbaren Stift bestehende Längsführung hat jedoch den Nachteil, daß sie nur eine Längsbewegung in vertikaler Richtung zuläßt. Aus diesem Grund ist ein Ausgleich von Toleranzen oder von Verformungen des Kraftstoffbehälters nur in dieser Richtung möglich. Aufgrund der langen Hebelarme des am Pumpenhalter befestigten Füllstandsgebers führen jedoch bereits geringe Winkeländerungen des Pumpenhalters aus der vorgesehenen Lage zu beträchtlichen Meßfehlern.

Aufgabe der Erfindung ist es, eine Fördereinheit mit einem Füllstandsgeber in einem Kraftstoffbehälter zu schaffen, bei dem Winkelabweichungen von der Soll-Lage des Flansches zum Befestigen der Fördereinheit am Kraftstoffbehälter und/oder des Bodens des Kraftstoffbehälters nicht auf die Meßgenauigkeit des an der Fördereinheit angeordneten Füllstandsgebers wirken.

Diese Aufgabe wird erfindungsgemäß durch die kennzeichnenden Merkmale des Anspruchs 1 gelöst.

Durch die Ausbildung der erfindungsgemäßen Fördereinheit als eine vollständige, vormontierte Einheit ist eine schnelle und lagerichtige Montage im Kraftstoffbehälter möglich. Durch die Vormontierbarkeit der Fördereinheit ist eine kompakte Bauweise möglich, die eine einfache Transportier- und Lagerbarkeit ergibt. Außerdem ist nach der Vormontage eine Prüfung der Fördereinheit auf ihre Funktion und die Meßgenauigkeit des Füllstandsgebers möglich.

Bei einer Anordnung der erfindungsgemäßen Fördereinheit in einem, im Kraftstoffbehälter befestigten Schwalltopf kann durch die Form des Schwalltopfes und die entsprechende, dazu angepaßte Form eines als Abstützfuß ausgebildeten Endes des Pumpenhalters eine Führung ausgebildet werden, die eine Falschmontage der Fördereinheit in dem Schwalltopf verhindert. Vorzugsweise ist die Form des Schwalltopfes oder bei einem Fehlen eines Schwalltopfes einer entsprechenden Ausbildung am Boden des Kraftstoffbehälters und des Abstützfußes in der Draufsicht keil- bzw. konusförmig und/oder in der Seitenansicht kreisförmig. Gleiches gilt für die Ausführungsform einer Fördereinheit, bei der am unteren Ende des Pumpenhalters ein Schwalltopf integriert ist. Durch den Freiraum oder das Spiel zwischen dem als Abstützfuß oder als Schwalltopf ausgebildeten unteren Ende des Pumpenhalters und der entsprechenden am Kraftstoffbehälter oder am Schwalltopf ausgebildeten Gegenführung ergibt es sich in einfacher Weise, daß sich der Kraftstoffbehälter oder der Schwalltopf um das untere Ende des Pumpenhalters bewegen oder schwenken kann.

Durch die erfindungsgemäße Ausbildung eines unter einer Federspannung stehenden längsverschiebbaren Drehlagers zwischen dem Befestigungsflansch und dem oberen Ende des Pumpenhalters wird die Fördereinheit gegen den Boden des Kraftstoffbehälters oder des Schwalltopfes so verspannt, daß die erfindungsgemäße Fördereinheit unabhängig von den Toleranzen und Verformungen des Kraftstoffbehälters immer in Soll-Einbaulage steht.

Durch die zusätzliche Abstützung der Fördereinheit über das als Abstützfuß oder als Schwalltopf ausgebildete untere Ende des Pumpenhalters am Boden des Kraftstoffbehälters wird eine Entlastung der Flanschdichtung und der Verschraubung erreicht. Vorteilhafterweise ist bei der erfindungsgemäßen Fördereinheit die Kraftstoffpumpe über einen Pumpenträger und Dämpfungselemente am bzw. im Pumpenhalter gelagert. Die Ausbildung des Pumpenträgers und der Dämpfungselemente sowie deren Anordnung am Pumpenträger kann beispielsweise entsprechend dem aus der DE-OS 39 27 218 bekannten Stand der Technik erfolgen.

Ausführungsformen der Erfindung werden nachstehend anhand der Zeichnungen beispielshalber beschrieben. Dabei zeigen:
- Fig. 1: eine Ansicht von der Seite einer ersten Ausführungsform einer Fördereinheit, in der eine einteilige Verbindung zwischen einem Flansch und einem Pumpenhalter dargestellt ist,
- Fig. 2: eine teilweise geschnittene Seitenansicht einer zweiten Ausführungsform einer in einem Kraftstoffbehälter angeordneten Fördereinheit,
- Fig. 3: eine geschnittene Teilansicht eines längsverschiebbaren Drehlagers in Richtung des mit einem "X" versehenen Pfeiles in der Fig. 2, wobei das Drehlager zwischen dem Befestigungsflansch und einem oberen Ende eines Pumpenhalters ausgebildet ist und
- Fig. 4: eine teilweise geschnittene Prinzipdarstellung einer in einem Schwalltopf angeordneten Fördereinheit in der Draufsicht.

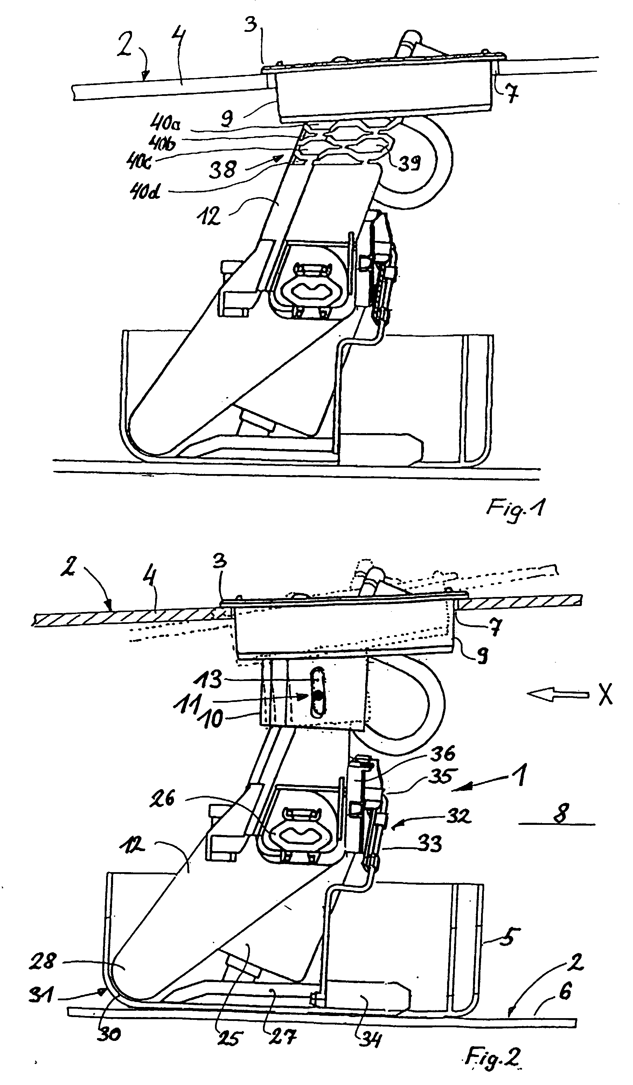

Die Fig. 1 zeigt eine Fördereinheit 1, bei der an einem Flansch 3 einstückig ein Pumpenhalter 12 längsverschiebbar und drehbeweglich angeordnet ist. Die Verbindung zwischen dem oberen Ende des Pumpenhalters 12 und dem Flansch 3 erfolgt durch ein den auftretenden Verformungen entsprechend nachgiebiges und federndes Bauteil. In der in der Fig. 1 gezeigten Ausführungsform ist an einem Bund 9 des Flansches 3 ein Gehäuseabschnitt 38 angeformt, der mit einer Vielzahl von Aussparungen 39 versehen ist. Wie dies in der Fig. 1 gezeigt ist, können die Aussparungen 39 im wesentlichen rechteckförmig sein. In weiteren Ausführungsformen sind die Aussparungen 39 kreisförmig, oval oder rautenförmig. Vorzugsweise sind die Aussparungen 39 in einer Reihe horizontal am Umfang des Gehäuseabschnittes 38 vorgesehen. In der in der Fig. 1 gezeigten Ausführungsform sind mehrere Reihen 40a, 40b, 40c, 40d winkelversetzt und untereinander am Gehäuseabschnitt 38 angeordnet. In einer anderen Ausführungsform ist zwischen dem Flansch 3 und dem Pumpenhalter 12 ein längsverschiebbares, drehbewegliches und federndes Element aus Gummi oder einem gummiähnlichen Material vorgesehen.

Die Fig. 2 zeigt eine Fördereinheit 1, die in einem Kraftstoffbehälter 2 angeordnet ist. Das obere Ende der Fördereinheit 1 ist über den Flansch 3 an der Oberseite 4 des Kraftstoffbehälters 2 befestigt. In der in der Fig. 2 gezeigten Ausführungsform befindet sich die Fördereinheit 1 in einem Schwalltopf 5, der an der Innenfläche der Unterseite oder des Bodens 6 des Kraftstoffbehälters 2 befestigt ist. Die Fördereinheit 1 wird durch eine in der Oberseite des Kraftstoffbehälters 2 ausgebildete Öffnung 7 in den Innenraum 8 des Kraftstoffbehälters 2 eingeführt. An den umlaufenden Flansch 3 schließt sich ein vorzugsweise ringförmiger Bund 9 an, an dem ein Ansatz 10 zur Ausbildung eines oberen Lagers 11 angeformt ist. Der Ansatz 10 ist vorzugsweise ein offenes Profil, beispielsweise ein U-Profil. Der Ansatz 10 kann jedoch auch einen geschlossenen Querschnitt, beispielsweise ein Rechteck-Profil, aufweisen. Das obere Ende 16 eines am Ansatz 10 angeordneten Pumpenhalters 12 hat dann einen entsprechenden Querschnitt. Über das obere Lager 11 ist der Pumpenhalter 12 mit einer daran angeordneten Kraftstoffpumpe 25 verschiebbar und drehbeweglich gelagert.

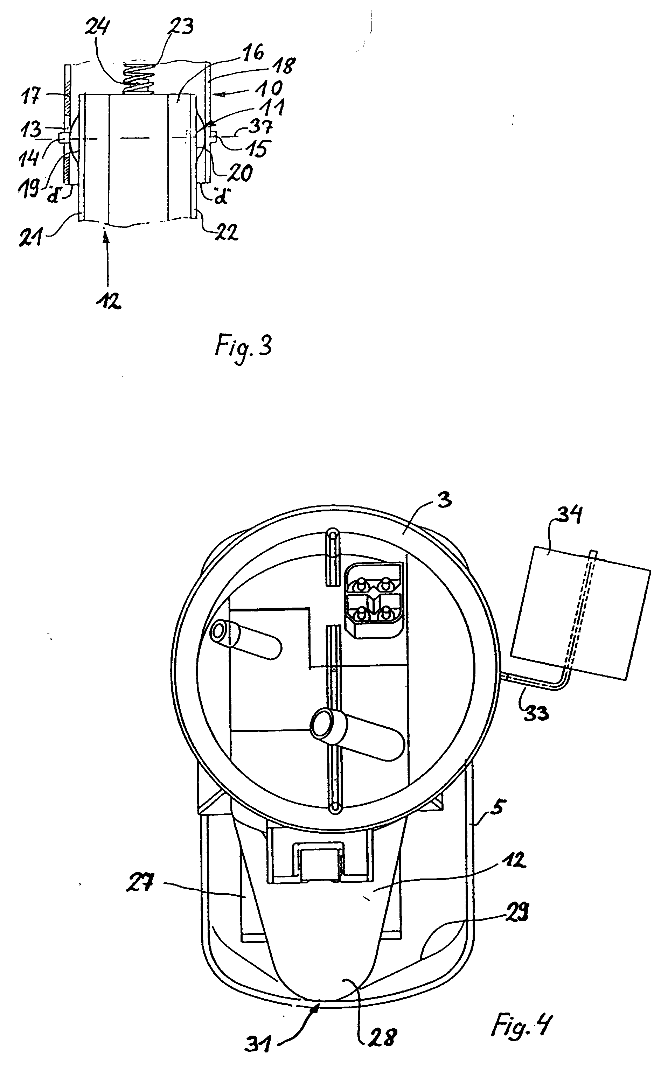

Das obere Lager 11 wird in der in den Fig. 2 und 3 gezeigten Ausführungsform dadurch gebildet, daß in dem Ansatz 10 des Flansches 3 an gegenüberliegenden Seiten 17, 18 des Ansatzes 10 Längsnuten 13 vorhanden sind, in denen jeweils ein vorzugsweise runder Zapfen 14, 15 verschiebbar und verschwenkbar geführt ist. Die Längsnuten 13 sind vorzugsweise an ihren beiden Enden geschlossen. Sollte beispielsweise das jeweilige untere Ende der Längsnuten 13 offen sein, so müssen entsprechende Anschläge vorgesehen sein, die den Zusammenhalt des Flansches 3 mit dem Pumpenhalter 12 gewährleisten. Das in dem Ansatz 10 geführte und gelagerte obere Ende 16 des Pumpenhalters 12 weist an seinen gegenüberliegenden Seiten 21, 22, an denen die Zapfen 14, 15 angeformt sind, kugelförmige Erhebungen 19, 20 auf, wie dies in der Fig. 3 dargestellt ist. Über die kugelförmigen Erhebungen 19, 20 ist eine Verschwenkbarkeit des Ansatzes 10 und/oder des oberen Endes 16 des Pumpenhalters in Richtung der Seitenwände 17, 18 des Ansatzes 10 möglich. Zwischen den Seiten 17, 18 des Ansatzes 10 und den Seiten 21, 22 des oberen Endes 16 ist zu diesem Zweck jeweils ein ausreichender Abstand "d" vorhanden.

Der Pumpenhalter 12 ist über eine Feder 23 gegen den Boden oder die Unterseite 6 des Kraftstoffbehälters 2 und in der anderen Richtung gegen den Flansch 3 bzw. die Oberseite des Kraftstoffbehälters 2 verspannt. Wie aus der Darstellung der Fig. 3 hervorgeht, weist das obere Ende 16 des Pumpenhalters 12 einen Zapfen 24 auf, in dem das untere Ende der Feder 23 gehaltert und geführt ist. Das nicht dargestellte obere Ende der Feder 23 ist in geeigneter Weise am Flansch 3 oder am Ansatz 10 gehaltert und geführt.

In der Fig. 2 ist in punktierten Linien eine Verformung der Oberseite 4 des Kraftstoffbehälters 2 angedeutet, die zu einer Verschwenkung des Flansches 3 führt. Aufgrund des längsverschiebbaren und drehbeweglichen Lagers 11 bleibt der Pumpenhalter 12 und der daran angeordnete Füllstandsgeber 32 in seiner Soll-Einbaulage.

Ungefähr in der Mitte des Pumpenhalters 12 ist die Pumpe 25 über einen Pumpenträger und Dämpfungselemente 26 entsprechend der DE-OS 39 27 218, siehe insbesondere Fig. 5, gelagert. Am unteren Ende der Pumpe 25 ist ein Ansaugsieb 27 angeordnet. Das untere Ende 28 des Pumpenhalters 12 ist als ein Abstützfuß ausgebildet, der als ein zweites Lager 31 dient.

In einer nicht dargestellten Ausführungsform ist an das untere Ende des Pumpenhalters 12 ein Schwalltopf integriert. Dieser Schwalltopf ist schwenkbar oder drehbeweglich am Boden 6 des Kraftstoffbehälters 2 geführt.

Wie aus der Ansicht von oben in der Fig. 4 ersichtlich ist, ist das untere Ende 28 des Pumpenhalters 12 schwenk- bzw. kippbar in einer Einbuchtung 29 des Schwalltopfes 5 angeordnet. Auf diese Weise ist es möglich, daß Verformungen und/oder Bewegungen des Bodens 6 des Kraftstoffbehälters 2 keine Auswirkung auf die Lage des Pumpenhalters 12 haben. Die Einbuchtung 29 ist in der Draufsicht in etwa dreieck- bzw. keilförmig. Das untere Ende 28 des Pumpenhalters 12 weist eine entsprechende aber schmälere Form auf, so daß Schwenkbewegungen möglich sind.

In der Seitenansicht der Fig. 2 ist erkennbar, daß das untere Ende 28 des Pumpenhalters 12 der Form der Seitenwand 30 des Schwalltopfes 5 angepaßt ist, so daß sich eine schwenkfähige Berührung oder Abstützung des Pumpenhalters 12 an der Seitenwand 30 ergibt.

Sollte in dem Kraftstoffbehälter 2 kein Schwalltopf 5 vorgesehen sein oder ist der Schwalltopf am Pumpenhalter 12 integriert, dann ist ein entsprechendes Lager 31 am Boden 6 des Kraftstoffbehälters 2 ausgebildet.

Aus der Fig. 2 geht ferner hervor, daß ungefähr in der Mitte des Pumpenhalters 12 ein Füllstandsgeber 32 angeordnet ist. Der Füllstandsgeber 32 weist einen Winkelgeberarm 33 auf, an dessen unterem Ende ein Schwimmer 34 angeordnet ist. Am oberen Ende des Winkelgeberarmes 33 ist ein Schwenklager 35 ausgebildet. Die Winkellage des Winkelgeberarmes 33 kann über einen am Gehäuse 36 des Pumpenhalters 12 angeordneten Dickschichtwiderstand in bekannter Weise gemessen werden, wobei das am Dickschichtwiderstand abgegriffene Signal zur Anzeige des Füllstandsniveaus dient.

In einer anderen nicht dargestellten Ausführungsform sind die Längsnuten 13 im oberen Ende 16 des Pumpenhalters 12 und die kugelförmigen Erhebungen 19, 20 und die sich daran fortsetzenden Zapfen 14, 15 im Ansatz 10 des Flansches 3 ausgebildet.

In einer weiteren nicht dargestellten Ausführungsform besteht das obere Lager 11 nur aus einem in einer Längsnut geführten Zapfen, wobei diese Längsnut und dieser Zapfen um 90° verdreht zu der in der Fig. 2 gezeigten Ausführungsform angeordnet sind. Der Ansatz 10 kann sich dann relativ zum oberen Ende 16 des Pumpenhalters 12 um die Längsachse des Zapfens verschwenken. Die äußeren Seitenwände, die wie bei der in der Fig. 2 gezeigten Ausführungsform durch den Ansatz 10 oder durch das obere Ende 16 des Pumpenhalters 12 gebildet sein können, dienen dann als Anschlag. Eine Verschwenkbarkeit senkrecht zu dieser Richtung kann durch eine kugelförmige Erhebung oder durch eine elastische und/oder federnde Ausbildung der entsprechenden äußeren Seitenwand ermöglicht werden.

## Patentansprüche

1. Fördereinheit mit einem Füllstandsgeber in einem Kraftstoffbehälter mit einer Führung, die zwischen einem Flansch (3) und einem als Pumpenhalter (12) dienenden Teil der Fördereinheit ausgebildet ist, wobei die Führung mit einer Feder versehen ist, gegen deren Kraft der Flansch und der Pumpenhalter (12) in der Führung in Längsrichtung der Fördereinheit bewegbar sind,
dadurch gekennzeichnet, daß die Verbindung zwischen dem Flansch (3) und dem oberen Ende des Pumpenhalters (12) über ein erstes, in benannter Längsrichtung verschiebbares und bzgl. des Flansches verschwenkbares Lager (11) erfogt daß das untere Ende (28) des Pumpenhalters (12) als ein zweites Lager dient, um das sich der Kraftstoffbehälter (2) oder ein Schwalltopf bewegen oder schwenken kann, so daß bei einer Winkelabweichung von der Soll-Lage des Flansches (3) und/oder des Bodens des Kraftstoffbehälters die Fördereinheit und der daran angeordnete Füllstandsgeber ihre Soll-Einbaulage beibehalten.

2. Fördereinheit nach Anspruch 1,
dadurch gekennzeichnet, daß der Übergang zwischen dem Flansch (3) und dem Pumpenhalter (12) einteilig über einen Gehäuseabschnitt (38) erfolgt, der zum einen zumindest in benannter Längsrichtung (37) federnd und damit längsverschiebbar ausgebildet ist und der zum anderen bzgl. des Flansches (3) verschwenkbar ist.

3. Fördereinheit nach den Ansprüchen 1 oder 2,
dadurch gekennzeichnet, daß der Gehäuseabschnitt (38) versetzt zueinander ausgebildete Aussparungen (39) aufweist.

4. Fördereinheit nach einem oder mehreren der vorhergehenden Ansprüche,
dadurch gekennzeichnet, daß die Aussparungen (39) länglich, insbesondere rechteckförmig oder rautenförmig sind, und in ihrer Längsrichtung in etwa parallel zum Umfang des Gehäuseabschnitts (38) ausgerichtet sind.

5. Fördereinheit nach einem oder mehreren der vorhergehenden Ansprüche,
dadurch gekennzeichnet, daß die Aussparungen (39) zum einen in gleicher Höhe in einer Reihe (40a, 40b, 40c, 40d) hintereinander gleichmäßig voneinander beabstandet angeordnet sind und daß mehrere Reihen (40a, 40b, 40c, 40d) untereinander und winkelversetzt ausgebildet sind.

6. Fördereinheit nach Anspruch 1,
dadurch gekennzeichnet, daß die Verbindung zwischen dem Flansch (3) und dem Pumpenhalter (12) über mindestens einen Zapfen (14, 15) erfolgt, der in einer entsprechend ausgebildeten Längsnut (13) in benannter Längsrichtung verschiebbar und zumindest um die Zapfenlängsachse verschwenkbar geführt ist.

7. Fördereinheit nach Anspruch 6,
dadurch gekennzeichnet, daß der Zapfen (14, 15) auf einer kugelförmigen Erhebung (19, 20) so angeordnet ist, daß der Flansch (3) relativ zum Pumpenhalter (12) senkrecht zur Längsachse (37) des Zapfens (14, 15) verschwenkbar ist.

8. Fördereinheit nach einem der Ansprüche 6 oder 7,
dadurch gekennzeichnet, daß am Flansch (3) ein Ansatz (10) als ein geschlossenes oder offenes Profil ausgebildet ist, in das oder um das ein am oberen Ende (16) des Pumpenhalters (12) ausgebildetes offenes oder geschlossenes Profil in genannter Langsrichtung verschiebbar und verschwenkbar geführt ist.

9. Fördereinheit nach einem oder mehreren der vorhergehenden Ansprüche,
dadurch gekennzeichnet, daß sich das als Abstützfuß ausgebildete untere Ende (28) des Pumpenhalters (12) formschlüssig am Boden (6) des Kraftstoffbehälters (2) oder an einer entsprechend ausgebildeten Seitenwand (30) eines Schwalltopfes (5) abstützt.

10. Fördereinheit nach Anspruch 9,
dadurch gekennzeichnet, daß das untere Ende (28) des Pumpenhalters (12) abgerundet ist.

11. Fördereinheit nach den Ansprüchen 9 oder 10, dadurch gekennzeichnet, daß das untere Ende (28) des Pumpenhalters (12) in einer Schnittfläche durch die Längsachse senkrecht zum Boden des Kraftstoffbehälters halbkreisförmig und in der Draufsicht keilfömig ist.

12. Fördereinheit nach einem oder mehreren der vorhergehenden Ansprüche, dadurch gekennzeichnet, daß am unteren Ende (28) des Pumpenhalters (12) ein Schwalltopf integriert ist und daß der Boden (6) des Kraftstoffbehälters (2) schwenkbar oder drehbeweglich um den Schwalltopf geführt ist.

## Claims

1. A fuel delivery module with a fuel level sensor in a fuel tank with a guide which is arranged between a flange (3) and a part of the fuel delivery module serving as pump holder (12), wherein the guide is provided with a spring against the force of the movement of the flange and the pump holder (12) in the guide in the longitudinal direction of the fuel delivery module, characterised In that the connection between the flange (3) and the upper end of the pump holder (12) is effected via a first bearing (11) which is displaceable in the aforesaid longitudinal direction and can swivel relative to the flange and that the lower end (28) of the pump holder (12) serves as a second bearing around which the fuel tank (2) or a swirl pot can move or swivel, so that upon angular deviation from the set position of the flange (3) and/or the bottom of the fuel tank the fuel delivery module and the fuel level sensor arranged thereon retain their set positions.

2. A fuel delivery module according to claim 1,
characterised in that the transition between the flange (3) and the pump holder (12) is effected in a one-piece manner via a housing section (38) which is firstly resilient at learn in the aforesaid longitudinal direction (37) and therefore is longitudinally displaceable and secondly can be swivelled relative to the flange (3).

3. A fuel delivery module according to claim 1 or claim 2,
characterised in that the housing section (38) has recesses (39) which are staggered relative to one another.

4. A fuel delivery module according to one or more of the preceding claims,
characterised in that the recesses (39) are oblong, especially rectangular or rhomboid and are aligned in their longitudinal direction approximately parallel to the circumference of the housing section (38).

5. A fuel delivery module according to one or more of the preceding claims,
characterised in that the recesses (39) are firstly arranged at the same height in a row (40a, 40b, 40c, 40d) behind one another and spaced uniformly and that a plurality of rows (40a, 40b, 40c, 40d) are arranged beneath each other and are staggered in an angular manner.

6. A fuel delivery module according to claim 1,
characterised in that the connection between the flange (3) and the pump holder (12) is effected through at least one pin (14, 15) which is guided so that it can move in the aforesaid longitudinal direction in a correspondingly formed longitudinal groove (13) and can swivel at least about the longitudinal axis of the pin.

7. A fuel delivery module according to claim 6,
characterised in that the pin (14, 15) is arranged on a spherical elevation (19, 20) in such a manner that the flange (3) can swivel relative to the pump holder (12) perpendicular to the longitudinal axis (37) of the pin (14, 15).

8. A fuel delivery module according to claim 6 or claim 7,
characterised in that a shoulder (10) is arranged as a closed or open section on the flange (3) and in which or about which an open or closed section formed on the upper end (16) of the pump holder (12) is guided so that it can undergo displacement in the aforesaid longitudinal direction and swivel movement.

9. A fuel delivery module according to one or more of the preceding claims,
characterised in that the lower end (28) of the pump holder (12) in the form of a support foot is braced with positive engagement against the bottom (6) of the fuel tank (2) or against a side wall (30) of a swirl pot (5) of suitable geometry.

10. A fuel delivery module according to claim 9,
characterised in that the lower end (28) of the pump holder (12) is rounded.

11. A fuel delivery module according to claim 9 or claim 10,
characterised in that the lower end (28) of the pump holder (12) in a sectional area through the longitudinal axis perpendicular to the bottom of the fuel tank is semi-circular and in a top view is wedge-shaped.

12. A fuel delivery module according to one or more of the preceding claims,
characterised in that a swirl pot is integrated at the lower end (28) of the pump holder (12) and that the bottom (6) of the fuel tank (2) is guided around the swirl pot so as to permit swivel or rotational movement.

## Revendications

1. Unité de transfert avec un détecteur de l'état de remplissage d'un réservoir, placé dans un réservoir de carburant avec un guidage constitué entre une bride (3) et une partie de l'unité de transfert, qui sert de support de pompe (12), le guidage étant pourvu d'un ressort, contre la force duquel la bride et le support de pompe (12) peuvent se déplacer dans le guidage, dans le sens longitudinal de l'unité de transfert,
caractérisée en ce que
• la liaison entre la bride (3) et l'extrémité supérieure du support de pompe (12) a lieu au moyen d'un premier palier (11) qui peut coulisser dans le sens longitudinal indiqué et qui peut pivoter en ce qui concerne la bride, et
• l'extrémité inférieure (28) du support de pompe (12) sert de second palier autour duquel le réservoir de carburant (2) ou un pot d'équilibrage peuvent se déplacer ou pivoter, de telle sorte que, dans le cas d'un écart angulaire par rapport à la position de consigne de la bride (3) et/ou du fond du réservoir de carburant, l'unité de transfert et le détecteur de l'état de remplissage du réservoir, disposé dessus, conservent leur position de montage de consigne.

2. Unité de transfert selon la revendication 1,
caractérisée en ce que
le passage entre la bride (3) et le support de pompe (12) a lieu d'une seule pièce au moyen d'une section de carter (38) qui d'une part est constituée de façon élastique au moins dans le sens longitudinal mentionné (37) et peut de cette façon coulisser dans le sens longitudinal, et qui d'autre part peut pivoter en ce qui concerne la bride (3).

3. Unité de transfert selon les revendications 1 ou 2,
caractérisée en ce que
la section de boîtier (38) présente des évidements (39) constitués de façon décalée les uns par rapport aux autres.

4. Unité de transfert selon l'une ou plusieurs des revendications précédentes,
caractérisée en ce que
les évidements (39) sont de forme allongée, en particulier de forme rectangulaire ou en forme de losange, et sont orientés dans leur sens longitudinal à peu près parallèlement au pourtour de la section de boîtier (38).

5. Unité de transfert selon l'une ou plusieurs des revendications précédentes,
caractérisée en ce que
• les évidements (39) sont disposés à la même hauteur dans une même rangée (40a, 40b, 40c, 40d), les uns derrière les autres, en étant espacés de façon régulière les uns des autres, et
• plusieurs rangées (40a, 40b, 40c, 40d) sont constituées les unes sous les autres et décalées angulairement.

6. Unité de transfert selon la revendication 1,
caractérisée en ce que
la liaison entre la bride (3) et le support de pompe (12) a lieu au moyen d'au moins un tenon (14, 15), qui est monté de façon à pouvoir coulisser dans une rainure longitudinale (13) constituée en conséquence dans le sens longitudinal mentionné, et à pivoter autour de son axe longitudinal.

7. Unité de transfert selon la revendication 6,
caractérisée en ce que
le tenon (14, 15) est disposé sur une proéminence (19, 20) en forme de bille, de telle manière que la bride (3) puisse pivoter par rapport au support de pompe (12) perpendiculairement à l'axe longitudinal (37) du tenon (14, 15).

8. Unité de transfert selon l'une des revendications 6 ou 7,
caractérisée en ce que
sur la bride (3), on constitue un appendice (10) sous la forme d'un profilé fermé ou ouvert, dans lequel ou autour duquel on fait passer un profilé ouvert ou fermé de façon à pouvoir pivoter dans le sens longitudinal mentionné, constitué à l'extrémité supérieure (16) du support de pompe (12).

9. Unité-de transfert selon l'une ou plusieurs des revendications précédentes,
caractérisée en ce que
l'extrémité inférieure (28) du support de pompe (12), constituée sous la forme d'un pied d'appui, prend appui par engagement par la forme sur le fond (6) du réservoir de carburant (2) ou sur une paroi latérale (30) d'un pot d'équilibrage (5), constituée en conséquence.

10. Unité de transfert selon la revendication 9,
caractérisée en ce que
l'extrémité inférieure (28) du support de pompe (12) est arrondie.

11. Unité de transfert selon les revendications 9 ou 10,
caractérisée en ce que
l'extrémité inférieure (28) du support de pompe (12), dans une surface en coupe suivant l'axe longitudinal perpendiculairement au fond du réservoir de carburant, a la forme d'un demi-cercle et la forme d'un coin en vue de dessus.

12. Unité de transfert selon l'une ou plusieurs des revendications précédentes,
caractérisée en ce qu'
à l'extrémité inférieure (28) du support de pompe (12) on intègre un pot d'équilibrage, et en ce que le fond (6) du réservoir de carburant (2) est monté de façon à pouvoir pivoter ou tourner autour du pot d'équilibrage.
